# DEMANDE DE BREVET EUROPEEN

(11) **EP 1 442 836 A1**
(43) Date de publication de la demande: **04.08.2004**
(21) Numéro de dépôt: 04300015.7
(22) Date de dépôt: 12.01.2004
(51) Int. Cl.: B23Q 16/02

(54) **Dispositif d'indexage/désindexage et machine de soudage robotisé équipée de ce dispositif**

(30) Priorité: 22.01.2003 FR 0300668
(71) Demandeur: Sauvageau Commercy Soudure, 55202 Commercy Cedex (FR)
(72) Inventeur: Guillou, Richard, 55200 Commercy (FR)
(74) Mandataire: Pittis, Olivier

(57) **Abrégé**

Dispositif d'indexage/désindexage pour installation de soudage permettant de solidariser ou de désolidariser un premier sous-ensemble (1a) fixe à un deuxième sous-ensemble (1b) mobile en rotation autour d'un axe de rotation. Le premier sous-ensemble (1a) fixe comprend un organe d'actionnement (5) mobile en rapprochement ou en éloignement par rapport à des moyens de blocage/libération (7) portés par le deuxième sous-ensemble (1 b), l'organe d'actionnement (5) étant apte à agir sur lesdits moyens de blocage/libération (7). Le deuxième sous-ensemble rotatif comporte des moyens d'entraînement (6) mobiles en rotation autour d'un axe (BB) et des moyens de blocage/libération (7) aptes à coopérer avec lesdits moyens d'entraînement (6), en réponse à une action mécanique de l'organe d'actionnement (5) sur lesdits moyens de blocage/libération (7) de manière à autoriser une rotation desdits moyens d'entraînement (6) autour de leur axe (BB). Installation de soudage robotisé équipée de ce dispositif d'indexage et de désindexage.

## Description

La présente invention concerne un dispositif d'indexage/désindexage, pour installation de soudage, permettant d'indexer ou désindexer des sous-ensembles rotatifs mobiles sur de grandes distances ou selon un débattement important dans l'espace, passant tous en un même point, dans une configuration bien précise, en particulier pour installation de soudage robotisé.

Sur des installions de soudage robotisé possédant au moins deux postes, à savoir un poste de chargement/déchargement de pièces à souder et de pièces soudées, respectivement, et un poste de soudage desdites pièces, munies d'organes de rotation allant alternativement d'un poste à l'autre, le chargement et le déchargement des pièces se font en général en une position bien précise, appelée le point zéro.

Pour assurer une mise en position correcte et pour des questions de sécurité, il est parfois nécessaire d'indexer à ce point zéro, c'est-à-dire de bloquer les éléments rotatifs, appelés plateaux, permettant d'amener par rotation les pièces d'un poste à l'autre de manière à empêcher qu'ils ne tournent pendant le chargement ou le déchargement des pièces, avant, pendant et après le soudage.

Un exemple d'installation de ce type est donné dans le document EP-A-442160 auquel on peut se reporter à titre informatif.

Actuellement, lorsqu'un tel plateau ayant un axe (BB) de rotation pouvant se déplacer dans l'espace doit être indexé à ce point zéro, un système d'indexage habituellement comprenant un vérin muni un doigt d'indexage est agencé directement sur le sous-ensemble de l'installation de soudage qui supporte le plateau. En d'autres termes, le plateau et le système d'indexage sont portés par la même partie de l'installation et sont donc entraînés en rotation de manière concomitante.

Or, cela pose les problèmes d'alimentation en énergie du système d'indexage du fait de la mobilité de l'axe du plateau et cela complique l'architecture globale de l'ensemble.

Par ailleurs, si le sous-ensemble est constitué d'un moto-réducteur à la sortie duquel est fixé le plateau, la position zéro est donnée par un indexage monté sur le moto-réducteur lui-même, ce qui nécessite l'utilisation d'un joint tournant pneumatique ou électrique puisque le sous-ensemble sur lequel est monté le plateau doit pouvoir effectuer une rotation autour d'un axe non confondu avec son propre axe de rotation.

Dans ce cas, le sous-ensemble a un coût beaucoup plus élevé du fait du montage et/ou du câblage des joints tournants et du prix de ces joints. De plus, l'architecture du sous-ensemble s'en trouve également compliquée.

Le problème qui se pose alors est de proposer un dispositif d'indexage/désindexage pour installation de soudage de sous-ensembles rotatifs, mobiles sur de grandes distances dans l'espace, passant tous en un même point dans une configuration bien précise, en particulier pour installation de soudage robotisé, qui ne présentent pas les inconvénients de l'art antérieur susmentionnés.

Dit autrement, le problème qui se pose est de pouvoir obtenir un indexage ou un désindexage d'un plateau mobile en rotation à l'aide d'un dispositif immobile ou ayant un mouvement de faible course de manière à s'affranchir de toute alimentation en énergie pour les sous-ensembles mobiles, à savoir notamment le plateau rotatif.

La solution de l'invention est un dispositif d'indexage et de désindexage pour installation de soudage permettant de solidariser ou de désolidariser un premier sous-ensemble fixe à un deuxième sous-ensemble mobile en rotation autour d'un axe de rotation, caractérisé en ce que :
- le premier sous-ensemble fixe comprend un organe d'actionnement mobile en rapprochement ou en éloignement par rapport à des moyens de blocage/libération portés par le deuxième sous-ensemble, ledit organe d'actionnement étant apte à agir sur lesdits moyens de blocage/libération, et
- le deuxième sous-ensemble rotatif comporte des moyens d'entraînement mobiles en rotation autour d'un axe (BB) et des moyens de blocage/libération aptes à coopérer avec lesdits moyens d'entraînement, en réponse à une action mécanique de l'organe d'actionnement sur lesdits moyens de blocage/libération de manière à autoriser une rotation desdits moyens d'entraînement autour de leur axe (BB).

Selon le cas, le dispositif de l'invention peut comprendre l'une ou plusieurs des caractéristiques techniques suivantes :
- l'organe d'actionnement est mobile en translation.
- l'organe d'actionnement est porté par un support mobile en translation.
- les moyens d'entraînement comprennent au moins un logement.
- les moyens d'entraînement ont une forme de disque portant au moins un logement sur sa surface.
- les moyens de blocage/libération coopèrent avec le logement porté par lesdits moyens d'entraînement.
- les moyens de blocage/libération comprennent une pièce formant loquet pivotant autour d'un axe (AA) et apte à venir se loger, au moins partiellement, dans un logement desdits moyens d'entraînement.

L'invention porte aussi sur une installation de soudage comprenant un dispositif d'indexage et de désindexage selon l'invention, de préférence une installation de soudage robotisé.

Selon le cas, l'installation de l'invention peut comprendre l'une ou plusieurs des caractéristiques techniques suivantes :
- le deuxième sous-ensemble forme tout ou partie d'une structure de type barillet rotatif à plusieurs positions servant à recevoir et à maintenir les pièces à souder.
- elle comporte un système d'entraînement en rotation motorisé comprenant au moins un moteur couplé à un organe d'embrayage, ledit organe d'embrayage venant coopérer avec les moyens d'entraînement de manière à permettre un entraînement en rotation des moyens d'entraînement autour de leur axe (BB) lorsque les moyens d'entraînement sont libres en rotation.
- l'organe d'embrayage et les moyens d'entraînement ont des formes ou des surfaces au moins partiellement complémentaires de manière à pouvoir s'engager l'un dans l'autre.
- le premier sous-ensemble est la poupée motrice du barillet.
- le deuxième sous-ensemble est une table rotative.
- elle comporte des moyens de soudage comprenant une torche de soudage, telle une torche MI/MAG alimentée en fil de soudage, une torche TIG ou une torche à plasma, portés par un bras robotisé.

La présente invention va maintenant être expliquée plus en détail en références aux figures annexées.

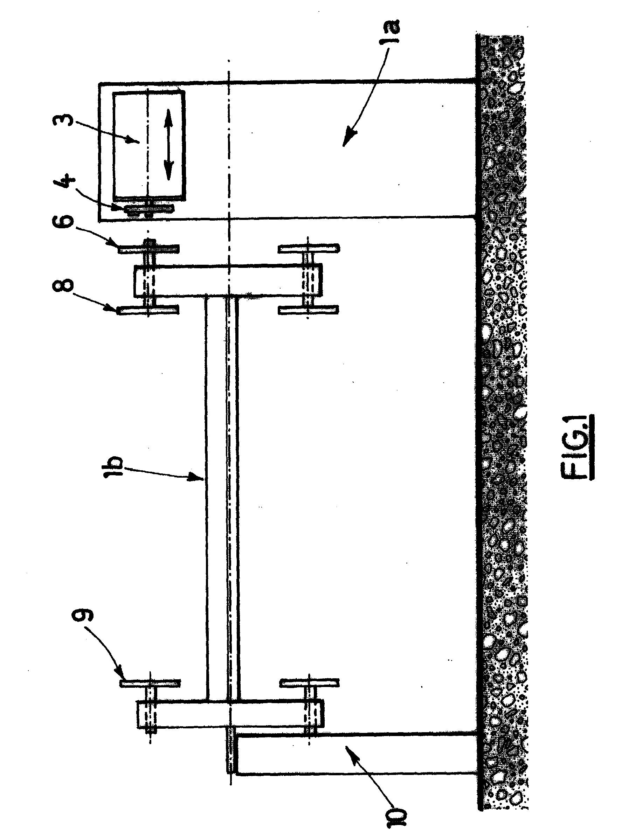

La figure 1 représente un schéma, en vue de côté, d'une installation de soudage robotisée équipée d'un dispositif selon l'invention.

Cette installation comprend un premier sous-ensemble 1a fixe, reposant sur le sol, et un deuxième sous-ensemble 1b rotatif. Le deuxième sous-ensemble 1b peut être un barillet porté par un support 10, comme montré en figure 1, ou une table tournante, i.e. rotative, alors que le premier sous-ensemble 1a est la poupée motrice du barillet ou de la table tournante.

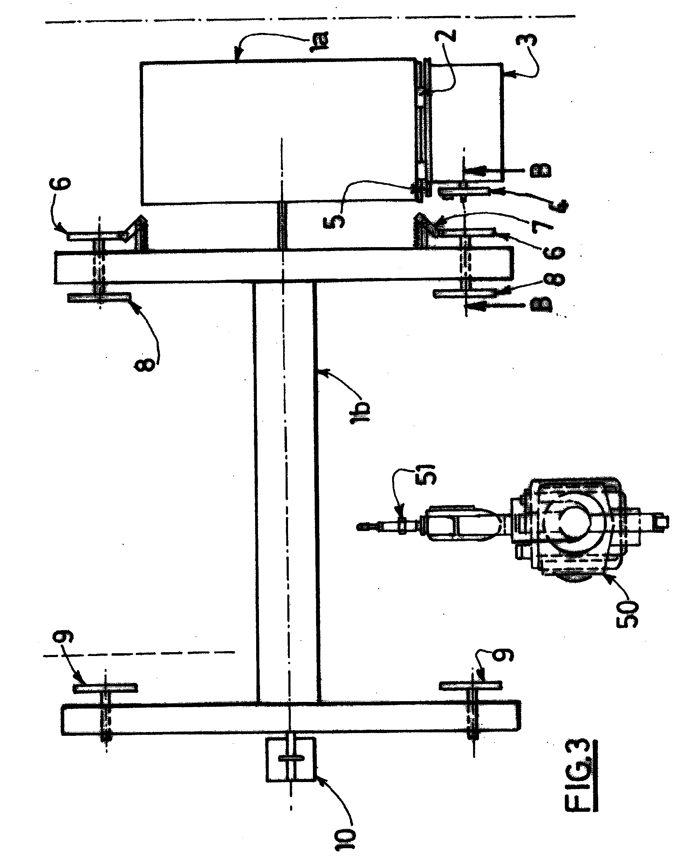

Cette installation comporte, en outre, des moyens de soudage comprenant une torche 51 de soudage alimentée en fil d'apport fusible et portée par un bras robotisé 50, comme illustré sur la Figure 3 qui est une vue de dessus de l'installation de la Figure 1.

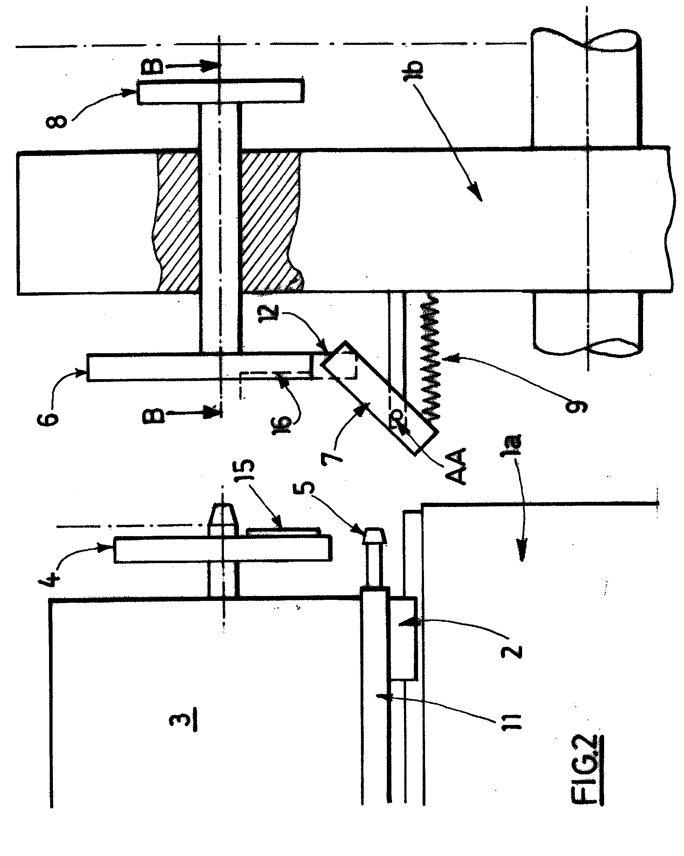

La figure 2 représente un exemple schématique d'un dispositif conforme à l'invention susceptible d'équiper l'installation de soudage robotisée des figures 1 et 3.

Le sous-ensemble 1b mobile représenté sur la figure 2 comprend au moins un plateau 6 rainuré et d'un loquet 7 pivotant autour d'un axe (AA). Plus précisément, le plateau 6 a une forme de disque portant un logement 12, tel une rainure ou un évidement, ledit plateau 6 étant lui-même mobile en rotation autour d'un axe (BB).

Le logement 12 a une taille et une forme adaptées pour recevoir tout ou partie du loquet 7, c'est-à-dire que le logement 12 et le loquet 7 sont conçus pour coopérer ensemble de manière à bloquer le plateau 6 dans une position angulaire donnée.

Par ailleurs, un organe d'actionnement tel un doigt 5 est porté par un support 11 mobile en translation à l'aide de tout moyen de déplacement adapté apte à permettre un déplacement du doigt 5 en approchement ou, selon le cas, en éloignement par rapport au plateau 6 et au loquet 7, par exemple support 11 mobile en translation est une plaque montée sur des patins à billes 2.

La plaque ou support 11 est déplacé en translation par un vérin ou analogue, commandé par une armoire de commande de la machine. Un dispositif de fin de course monté sur le sous ensemble 1a déclenche l'arrêt de la rotation de la poutre et la translation du support 11 en passant sur une came montée sur le sous ensemble 1b.

Le support 11 peut éventuellement porter aussi le système 3 d'entraînement en rotation motorisé du ou des plateaux 6 et 8 autour de l'axe (BB) ; toutefois, le système 3 d'entraînement peut aussi être aménagé sur une autre partie de l'installation.

Le doigt 5 et le loquet 7 sont agencés l'un en regard de l'autre de manière à ce que le loquet 7 se présente face au doigt 5 et puisse coopérer de manière à maintenir le plateau 6 en position fixe (indexage) ou, à l'inverse, à le libérer (désindexage).

Lorsque l'armoire de commande de la machine commande le vérin agissant sur le support 11 portant le doigt 5 de manière à ce que, lors d'un désindexage, le vérin provoque un déplacement du support 11, donc du doigt 5, dans le sens tendant à rapprocher le support 11 et le doigt 5 du loquet 7.

Le doigt 5 va alors venir exercer une pression mécanique sur le loquet 7 en repoussant le loquet 7 qui va alors pivoter autour de son axe (AA), ce qui provoquera la sortie du loquet 7 sortie de la rainure 12 du plateau 6 dans laquelle il était engagé, de sorte de libérer ainsi ledit plateau 6.

Le plateau 6 étant alors désindexé va pouvoir à son tour pouvoir être mis en mouvement autour de son axe (BB) en étant entraîné en rotation par le système 3 d'entraînement qui comprend un moteur dont l'axe (CC) porte un moyen d'embrayage 4, tel un disque de taille, forme ou dimensions identiques ou différentes de celles du plateau 6, venant coopérer avec le plateau 6 de manière à pouvoir lui conférer un mouvement rotatif autour de l'axe (BB), l'axe (CC) et l'axe (BB) étant confondus, i.e. coaxiaux.

Le moyen d'embrayage 4 porte une expansion 15 qui coopère avec un logement complémentaire 16 porté par le plateau 6 de manière à pouvoir assurer l'entraînement du plateau 6 en rotation. Le plateau 6 peut alors tourner alors autour de son axe rotation (BB) selon un angle prédéterminé puis revenir ensuite dans une position d'indexage dans laquelle il devra à nouveau être bloqué pendant une durée souhaitée suffisante pour procéder par exemple à un chargement ou un déchargement de pièces à souder ou de pièces soudées.

Dans cette position d'indexage, le vérin opère un retrait du support 11 et le doigt 5 libère alors le loquet 7 puisque le doigt 5 va s'éloigner du loquet et donc ne va plus exercer de pression mécanique sur celui-ci.

Le loquet 7 est alors rappelé dans sa position d'indexage initiale par un système de rappel 9 adapté, par exemple un moyen à ressort, ce qui engendre un indexage du plateau 6, puisque le loquet 7 peut alors revenir coopérer avec l'une des rainures 12 du plateau 6 de sorte d'empêcher tout mouvement rotatif du plateau 6 autour de l'axe (BB).

Le sous-ensemble 1b comprenant le plateau 6, le loquet 7 et le plateau 8 peut alors prendre la place de celui qui vient d'être indexé.

C'est donc uniquement lors de la phase de travail que le plateau 6 tourne sur lui-même en étant désindexé.

Le dispositif de la figure 2 peut être agencé sur toute installation de soudage nécessitant d'avoir un dispositif d'indexage et de désindexage, en particulier une installation de soudage robotisé.

## Revendications

1. Dispositif d'indexage et de désindexage, en particulier pour installation de soudage, permettant de solidariser ou de désolidariser un premier sous-ensemble (1a) fixe à un deuxième sous-ensemble (1 b) mobile en rotation autour d'un axe de rotation, **caractérisé en ce que** :
- le premier sous-ensemble (1a) fixe comprend un organe d'actionnement (5) mobile en rapprochement ou en éloignement par rapport à des moyens de blocage/libération (7) portés par le deuxième sous-ensemble (1b), ledit organe d'actionnement (5) étant apte à agir sur lesdits moyens de blocage/libération (7), et
- le deuxième sous-ensemble rotatif comporte des moyens d'entraînement (6) mobiles en rotation autour d'un axe (BB) et des moyens de blocage/libération (7) aptes à coopérer avec lesdits moyens d'entraînement (6), en réponse à une action mécanique de l'organe d'actionnement (5) sur lesdits moyens de blocage/libération (7) de manière à autoriser une rotation desdits moyens d'entraînement (6) autour de leur axe (BB).

2. Dispositif selon la revendication 1, **caractérisé en ce que** l'organe d'actionnement (5) est mobile en translation.

3. Dispositif selon l'une des revendications 1 ou 2, **caractérisé en ce que** l'organe d'actionnement (5) est porté par un support (11) mobile en translation.

4. Dispositif selon la revendication 1, **caractérisé en ce que** les moyens d'entraînement (6) comprennent au moins un logement (12).

5. Dispositif selon l'une des revendications 1 ou 3, **caractérisé en ce que** les moyens d'entraînement (6) ont une forme de disque portant au moins un logement (12) sur sa surface.

6. Dispositif selon l'une des revendications 1 à 5, **caractérisé en ce que** les moyens de blocage/libération (7) coopèrent avec le logement (12) porté par lesdits moyens d'entraînement (6).

7. Dispositif selon l'une des revendications 1 à 6, **caractérisé en ce que** les moyens de blocage/libération (7) comprennent une pièce formant loquet (7) pivotant autour d'un axe (AA) et apte à venir se loger, au moins partiellement, dans un logement (12) desdits moyens d'entraînement (6).

8. Installation de soudage comprenant un dispositif d'indexage et de désindexage selon l'une des revendications 1 à 7, de préférence une installation de soudage robotisé.

9. Installation de soudage selon la revendication 8, **caractérisée en ce que** le deuxième sous-ensemble forme tout ou partie d'une structure de type barillet rotatif à plusieurs positions servant à recevoir et à maintenir les pièces à souder.

10. Installation de soudage selon l'une des revendications 8 ou 9, **caractérisée en ce qu'**elle comporte un système d'entraînement en rotation (3, 4) motorisé comprenant au moins un moteur couplé à un organe d'embrayage (4), ledit organe d'embrayage (4) venant coopérer avec les moyens d'entraînement (6) de manière à permettre un entraînement en rotation des moyens d'entraînement (6) autour de leur axe (BB) lorsque les moyens d'entraînement sont libres en rotation.

11. Installation de soudage selon la revendication 10, **caractérisée en ce que** l'organe d'embrayage (4) et les moyens d'entraînement (6) ont des formes ou des surfaces au moins partiellement complémentaires de manière à pouvoir s'engager l'une dans l'autre.

12. Installation de soudage selon l'une des revendications 8 ou 9, **caractérisée en ce que** le premier sous-ensemble est la poupée motrice du barillet.

13. Installation de soudage selon la revendications 8, **caractérisée en ce que** le deuxième sous-ensemble est une table rotative.

14. Installation de soudage selon l'une des revendications 8 à 14, **caractérisée en ce qu'**elle comporte des moyens de soudage comprenant une torche (51) de soudage portés par un bras (50) robotisé.
